# EUROPEAN PATENT APPLICATION

(11) **EP 4 796 349 A2**
(43) Date of publication of application: **26.08.2026**
(21) Application number: 26182915.4
(22) Date of filing: 31.03.2023
(51) Int. Cl.: B60C 11/13

(54) **TIRE WITH AN IMPROVED TREAD PATTERN**

(62) Document number(s) of the earlier application(s) in accordance with Art. 76 EPC: 23165926.9 / 4 438 338
(71) Applicant: Bridgestone Europe NV/SA, 1930 Zaventem (BE)
(72) Inventor: PISCOPO, Guido, 00128 Rome (IT)
(74) Representative: Bardehle Pagenberg Partnerschaft mbB Patentanwälte Rechtsanwälte

(57) **Abstract**

According to aspects of the invention, a tire for a vehicle comprising a tread is provided. The tread comprises a set of consecutive blocks arranged along a circumference of the tire, wherein each block comprises a leading edge and a trailing edge; and a plurality of first grooves arranged over the circumference of the tire, wherein each of the plurality of first grooves is arranged between two blocks of the set of consecutive blocks. Each of the set of consecutive blocks comprises a first portion arranged at a central portion of the tire, and a second portion arranged in axial direction towards a shoulder of the tire with respect to the first portion; wherein the first portion and the second portion are formed continuously; wherein a first recess is formed between the first portion and the second portion, and wherein the first recess is arranged in at least one of the leading edge and the trailing edge of the block.

## Description

### Field of the disclosure

The present invention relates to a vehicle tire. One possible application of the disclosed tire relates to an all-season tire intended to equip a passenger vehicle or commercial van vehicles. The disclosure can also be applied to other tires, for example winter tires, summer tires or tires for off the road applications.

### Background

All-season tires - which are used here as a typical example to facilitate readability - are known for providing good grip on snow covered road surfaces while also providing good performance on dry and wet road surfaces. Such tires are intended for use throughout the year, such that changing between summer and winter tires is no longer necessary.

For example, all-season tires are known that comprise grooves that extend from a center of the tire's tread, i.e., from the equatorial plane of the tire, towards a shoulder (sometimes also referred to as "shoulder portion" or "side portion") of the tire. These grooves, which typically extend in substantial axial direction, are configured to deliver water from a contact patch of the tire with the road outwards to provide contact between tire blocks and the road surface. Contact between blocks and the road is necessary to provide friction which provides for lateral road holding and further allows a driver to control the movement of the vehicle by accelerating, breaking and/or steering.

Some known tires are provided with grooves extending in a block in substantially circumferential direction between two consecutive grooves that extend substantially in axial direction. These grooves are disposed between a shoulder portion of the block and the more interior portions, sometimes denoted as intermediate portion and central portion. The shoulder portion of the block is mostly intended to provide acceleration and breaking performance, because it is generally arranged perpendicular to a rolling direction, e.g., in V-shaped or S-shaped treads, such that it is intended to provide a friction force parallel to the driving direction, such as breaking force or accelerating force. Thus, breaking and accelerating leads to deformation of the blocks, especially in the shoulder portion. To still ensure steering performance and to prevent contact loss of the rubber with the ground a groove between the shoulder portion and an axially more inward portion, sometimes denoted as the intermediate portion, is provided.

Thus, to further improve on bending capability, providing further grooves, for example, between the intermediate and the central portion, may be envisaged. However, such grooves bear the disadvantage of locally increasing the tire's wear energy due to the additional edges. This leads to higher total wear of the tread profile and to uneven wear, as wear occurs predominantly around these grooves.

Thus, it is an object of the present invention to mitigate these disadvantages and to provide a tire with comparable performance, but which has lower total wear and whose wear is distributed more evenly over the total width of the tread.

### Summary of the invention

This object is achieved by providing an improved vehicle tire according to the independent claim. Further embodiments are described in the dependent claims.

According to aspects of the invention, a tire for a vehicle comprising a tread is provided. The tread comprises a set of consecutive blocks arranged along a circumference of the tire, wherein each block comprises a leading edge and a trailing edge; and a plurality of first grooves arranged over the circumference of the tire, wherein each of the plurality of first grooves is arranged between two blocks of the set of consecutive blocks. Each of the set of consecutive blocks comprises a first portion arranged at a central portion of the tire, and a second portion arranged in axial direction towards a shoulder of the tire with respect to the first portion; wherein the first portion and the second portion are formed continuously; wherein a first recess is formed between the first portion and the second portion, and wherein the first recess is arranged in at least one of the leading edge and the trailing edge of the block.

The continuous forming of the first and second portion, combined with arranging a recess between the portions allows for high tread bending capability, since the recess acts similar to a hinge for tread. At the same time, the benefits of having the first and second portions connected, in particular wear energy reduction and higher longitudinal stiffness, are maintained. Moreover, the recess (or the multiple recesses, if there are several) contributes to snow trapping as well, and thus increases snow tire grip.

### Brief description of the Figures

Fig. 1 shows a sketch of a vehicle tire according to the present disclosure.
Fig. 2 illustrates a half tread profile of a tire according to the present disclosure.
Fig. 3 illustrates a close-up view of the block portion containing the recesses.
Figs. 4A to 4E illustrate various embodiments of a block having two recesses between the first and the second portion in different arrangements.
Fig. 5 illustrates an exemplary embodiment of a V-shaped directional tread pattern according to the present disclosure.
Fig. 6 illustrates an exemplary embodiment of an S-shaped tread pattern according to the present disclosure.

### Detailed description

To overcome the disadvantages of the prior art as discussed above, it may be desirable to provide a first recess in a leading or a trailing edge of the block to locally reduce the stiffness of the block at the position of the recess. This allows for the tread to bend around the recess when the tire is under stress and/or strain, because the recessed portion, having reduced stiffness, may act as a hinge. This way, the tire, which is generally shaped in a convex manner, is enabled to adapt to a substantially flat ground. The improved bending capability of the recess (or the multiple recesses, if there are several) may thus increase a contact patch of the tire which allows for improved tire traction on wet and dry as well as snow-covered ground.

Moreover, the recesses provide an additional edge in the tire which may further improve the tire's performance on snow-covered grounds. Moreover, the recesses may trap snow therein, to further improve traction on snow-covered roads.

The provision of one or more recesses between the first (e.g., central) and the second (e.g., intermediate) portion of the tread allows the omission of a groove between the two portions. Thus, as described above, the disadvantage that goes along with providing an additional groove between the central and the intermediate portion, i.e., to locally increase the wear energy of the tread, can be avoided. Furthermore, due to the proposed solution, the wear energy can be distributed over the width of the tread more evenly to avoid local peaks in wear.

Moreover, grooves which are arranged substantially perpendicular to the first grooves, may generally lead to turbulences in water which is guided outwardly through the first grooves. By providing recesses instead of grooves, the risk of creating these turbulences can be reduced such that water drainage capacity of the tread is improved, thereby increasing traction of the tire on wet grounds.

Consequently, the recesses provide for bending and decoupling of neighboring tread portions, while mitigating the negative effects of grooves such as excessive wear energy and water turbulences.

In preferred embodiments, described in more detail below, further improvement for traction on snow-covered ground is gained by additionally providing sipes, which are small incisions in a block, typically, but not necessarily, extending in substantially axial direction. Such sipes are configured to trap snow therein and provide an additional edge to increase performance on snow-covered road surfaces. Providing multiple sipes, which would further increase snow performance, lowers the stiffness of the blocks and thus impairs dry and wet performance, so preferably only few sipes per block, most preferably only one sipe per block, are provided the tires to achieve an acceptable trade-off between snow and wet/dry performance.

A "groove" represents an incision in the tread pattern. A width of the groove may vary, for example, the first groove may be of larger width than the second groove, or may be of equal or even smaller width. For example, the width of a groove may be at least 2 mm. The width of a single groove does not necessarily have to be constant: For example, a groove can have a wider width towards the opening of the tread pattern, and a smaller width in radial inward direction. Also, a depth of a groove may vary, and sometimes a groove may extend at full tread depth (with the full tread depth being the maximum distance between the radially outermost part of the tire to the bottom of the deepest groove, measured in radial direction), but this does not necessarily have to be the case. For example a depth of least 1 mm, preferably at least 3 mm, is considered.

A "sipe" also represents an incision in the tread pattern. Reference herein to a "sipe" means an incision within a block, rather than a "groove" that separates blocks. For example, the width of sipe may also be smaller than the width of a groove, and be for example of less than 2 mm. Just as is the case for the groove, the width of a sipe does not have to be constant, and means can be applied to allow for a wider width towards the opening of the tread pattern, and a smaller width in radial inward direction. Also, a depth of a sipe may vary, and sometimes a sipe may extend at full tread block depth, but this does not necessarily have to be the case. For example, a depth of at least 1 mm, preferably at least 20% of the depth of the first grooves, is considered.

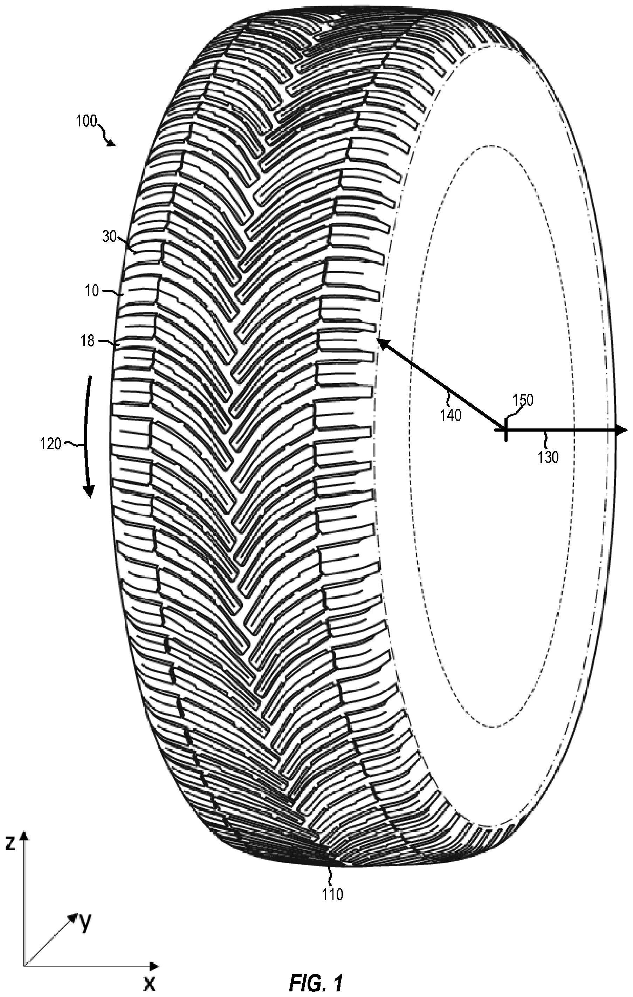

Fig. 1 shows a sketch of a vehicle tire according to the present disclosure.

According to Fig. 1, the tire 100 comprises a tread 110. The tread comprises a set of consecutive blocks 10 as well as a plurality of grooves 18, each groove 18 arranged between two blocks 10 of the set of consecutive blocks. Moreover, a sipe 30 may be arranged within each of the set of consecutive blocks 10.

The blocks may be arranged consecutively a circumferential direction 120 of the tire.

Within the context of the present disclosure, "circumferential direction" 120 means a direction perpendicular to an axial direction 130 which is parallel to the direction in which the tire usually rolls, i.e., parallel to a tangential direction with respect to the circumference of the tire. With respect to Fig. 1, the circumferential direction 120 is thus a direction which is within a plane parallel to the yz-plane.

Within the context of the present disclosure, "axial direction" 130 means a direction parallel to the direction of an axis of a vehicle on which the tire is usually mounted. Thus, according to Fig. 1, the axial direction 130 is parallel to the x-axis and thus perpendicular to the yz-plane.

Within the context of the present disclosure, "radial direction" 140 means a direction perpendicular to the axial direction. The radial direction is parallel to a connection of a center 150 of the tire with the tread surface. Thus, the radial direction is within a plane parallel to the yz-plane and generally perpendicular to the axial direction 130 and the circumferential direction 120.

Within the context of the present disclosure, the "equatorial plane" refers to a plane which is perpendicular to the axial direction 130 and cuts the section width of the tire in two halves of equal width. Thus, the equatorial plane is parallel to the yz-plane and corresponds to the widthwise centerline of the tread.

Also, any numeral angles given herein are to be considered absolute values, i.e., not limiting to the orientation of the respective angle.

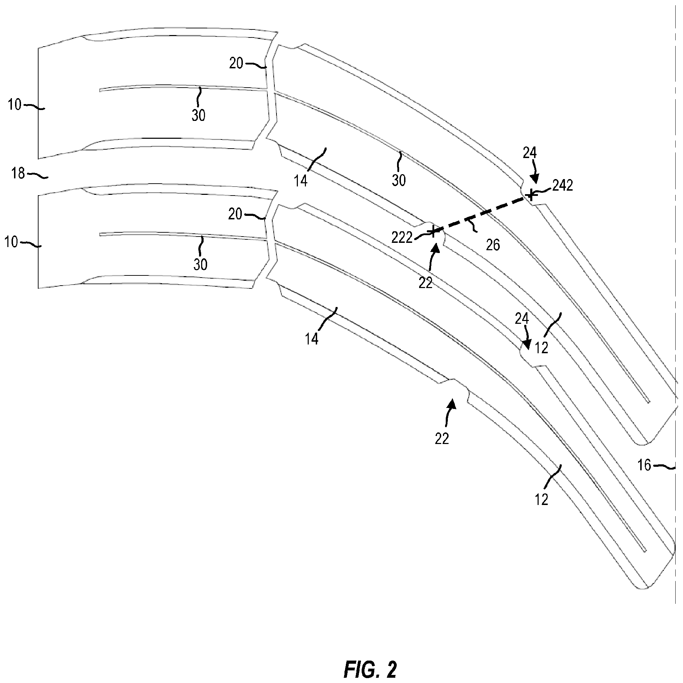

Fig. 2 illustrates a half tread profile of a tire according to the present disclosure.

According to Fig. 2, the tread of the tire comprises a set of consecutive blocks 10 arranged along a circumference of the tire. "Consecutive blocks" within the context of this disclosure means that the tread comprises multiple blocks following one another in succession over the circumference of the tire. While it is preferred that the invention according to the present disclosure is provided for all blocks of the tire, it is possible that some blocks, which may be arranged between individual blocks 10 of the set of consecutive blocks, do not comprise any recesses between the first (e.g., central) portion and the intermediate (e.g., second) portion of the block.

According to Fig. 2, each of the blocks 10 comprises a first portion 12 arranged at a central portion of the tire. The central portion of the tire is the portion which is closest to or adjacent to the equatorial plane 16 of the tire. Moreover, according to Fig. 2, each of the blocks 10 comprises a second portion 14, which is arranged in axial direction towards a shoulder of the tire with respect to the first portion 12, and immediately next to central portion. The second portion 14 may be denoted as "intermediate portion". The first portion 12 may be denoted as "central portion". According to Fig. 2, the first portion 12 and the second portion 14 are formed continuously, meaning that there is no complete disruption between the two portions 12, 14. Instead, they are formed as one continuous arrangement.

Thus, during normal rolling condition, the first portion 12 and the second portion 14 should come - at least partly - in contact in a footprint of the tire. Thus, for the two portions to be formed continuously, there may also be a small incision separating the two portions, so long as the portions 12, 14 come into contact in the footprint of the tire at least partly. Likewise, one or more sipes that are provided within the block (as explained earlier) do not prevent the continuous arrangement of the first portion 12 and the second portion 14.

As is further illustrated in Fig. 2, a first recess 22 is formed between the first portion 12 and the second portion 14. In the shown example, the first recess 22 is arranged in the leading edge of the block 10. However, it may also be disposed at the trailing edge instead, or both edges may be provided with a recess between the first portion and the second portion (see also below).

In the context of this disclosure, "leading edge", sometimes also denoted as "traction edge", refers to the edge of the block that, when a longitudinal traction force is applied to the tire reacts mostly to such force. Typically, the "leading edge" is the edge of a block which is of greater length than the lateral edges of the block, and which first encounters the ground as the block of a tire rolling in a preferred rolling direction enters the contact patch of the tire with the ground.

"Trailing edge", sometimes also denoted as "breaking edge", refers to the edge of the block that, when a longitudinal breaking force is applied to the tire reacts mostly to such force. Typically, the "trailing edge" is the edge of the block which is of greater length than the lateral edges of the block, and which is the last edge to lose contact with the ground as the block of the tire rolling in a preferred rolling direction leaves the contact patch of the tire with the ground.

The first recess 22 may be arranged such that the stiffness of the block 10 is reduced in an area around the first recess 22 as compared to the stiffness in the first portion 12 and the second portion 14. This way, each of the set of consecutive blocks 10 is configured to bend around the first recess 22 when the tire is in rolling condition.

Thus, the first recess provides a functionality which is similar to a hinge and allows improved bending capability of the block: Locally reducing the stiffness of a block by providing a recess can configure the block portion around the recess to behave as a hinge, allowing the tire to bend between the first portion 12 and the second portion 14, such that a tire, which is generally shaped in a convex manner, is enabled to adapt to a substantially flat ground. The improved bending capability of the first recess 22 may thus increase a contact patch of the tire which allows for improved tire traction on wet and dry as well as snow-covered ground.

Furthermore, the first recess 22 allows for a reduction of the mechanical coupling between the first portion 12 and the second portion 14. This way, the first portion 12 and the second portion 14 can respond separately to stress and strain applied to the block during normal rolling conditions of the tire. Such strains and stresses are applied to the tire for example during breaking, acceleration or steering, as well as during overall rolling.

Tires known from the prior art achieve the decoupling of the first portion 12 and the second portion 14 by providing an additional groove which is arranged in substantially circumferential direction. However, circumferential grooves provide additional edges which locally increase the tread's wear energy. This leads to increased wear as well as to an uneven distribution of wear energy, such that the wear is distributed unevenly over the width of the tread, i.e., block parts near the circumferential groove experience more wear than other parts of the block.

By providing the recess 22 between the first portion 12 and the second portion 14, a further groove can be omitted, such that improved bending and decoupling of block portions is achieved by the recess 22 while omitting the increased and unevenly distributed wear energy.

In some embodiments, the first recess 22 may be arranged at the leading edge of the block 10, and the block may further comprise a second recess 24 which is arranged at the trailing edge of the block 10. Providing a second recess further improves the decoupling/bending capability of the block. Especially, since the first recess 22 and second recess 24 are arranged at opposite edges of the block, the direction of the block's bending can be controlled more accurately.

In some embodiments, a connection line 26 between a geometric center 222 of the first recess 22 and a geometric center 242 of the second recess 24 may have an inclination angle with respect to the circumferential direction of at least 0° and at most 80°. Preferably, the inclination angle of the connection line 26 may be at least 0° and at most 60°. The geometrical center may also be denoted as the "centroid" and corresponds to the arithmetic mean position of all points in the surface of the respective recess. The connection line 26 may also correspond to a separation line between the first portion 12 and the second portion 14.

A connection line 26 between the geometric centers of the recesses 22, 24 with an inclination angle in the specified range provides for an optimized block bending capability while maintaining the block's circumferential stiffness.

In some embodiments, the first recess 22 may have a vertical extension measured perpendicular to an outer surface of the block in contact with ground when the tire is in normal condition, the vertical extension being at least 20% of a depth of the first grooves 18.

According to Fig. 2, the tread may further comprise a plurality of sipes 30. In the shown tread pattern, each of the plurality of sipes 30 may preferably extend substantially along a shape of at least one of the first portion 12 and the second portion 14 of each of the set of consecutive blocks 10. However, other arrangements and shapes of the sipes on the outer tread surface are also possible, for example wavy shapes, zigzag-shapes, and the like. The sipes do not necessarily have to follow the shape of the block. For example, the sipes may only be included along a part of the shape of the block, or have a different angle of inclination than the underlying block or portion of the block with respect to the circumferential direction. Also, while some sipes may have walls extending radially towards a center of the tire, some sipes may also have wavy shapes, zigzag shapes or the like in radial direction. Moreover, such sipes may also be inclined with respect to the radial direction. Some sipes may comprise protrusions near a bottom of the sipe. Sipes 30 are capable of trapping snow therein and providing an additional edge of the tread. This improves traction on snow-covered grounds.

In some embodiments, the plurality of sipes 30 may define an edge ingredient (EI) corresponding to the ratio between a sum of projected lengths of the plurality of sipes in an axial direction (SAP) and the circumference of the tread (C), such that $EI = \frac{\sum SAP}{C} ,$ wherein the EI is at least 2 and at most 20. Preferably, the EI may be at least 2 and at most 16, more preferably at least 2 and at most 15.

The circumference C of the tire is measured at the radially outermost ring of the tire in inflated condition. For the inflation pressure and ambient temperature, the same specifications as described below for tire footprint measurements apply.

A high edge ingredient provides for better capacity for trapping snow, which improves the traction of the tire on snow-covered ground. However, a high edge ingredient also leads to a low stiffness of the blocks, which generally worsens breaking/acceleration performance on dry ground. An edge ingredient in one of the above ranges provides a particularly good tradeoff between traction on snow-covered grounds and braking/acceleration performance on dry ground.

Preferably, the edge ingredient is balanced with the provision of the recess(es) and any second grooves: For example, as the recess locally reduces stiffness, the edge ingredient should remain within the range indicated, to ensure sufficient stiffness. Also, since the recess(es) contribute to snow trapping, less sipes, or sipes of smaller lengths, may be needed. If more than one recess is provided per block, and/or if the one or more recesses are of larger surface, providing an edge ingredient within the lower part of the range, e.g., of at least 2 and at most 10, may be beneficial.

The tire according to Fig. 2 may further have a void volume, being the volume of all grooves, sipes and recesses provided in the tread, and a volume of rubber provided in the tread, together making up the total volume of the tread. I.e., if the total volume of the tire is V_{T}, the void volume being V_{V} and the rubber volume being V_{R}, then the total volume V_{T} would be V_{T}=V_{V}+V_{R}. In a preferred embodiment, the ratio V_{V}/V_{R} between the void volume V_{V} and the rubber volume V_{R} may be at least 0.20 and at most 0.40. Preferably, the ratio V_{V}/V_{R} may be at least 0.24 and at most 0.37, more preferably at least 0.28 and at most 0.35. The ratio V_{V}/_{VR} is directly linked to the stiffness of the tread profile. Thus, a higher ratio V_{V}/V_{R} indicates a higher amount of void in the tread, which leads to lower stiffness of the tread, and thus benefits snow performance. A lower ratio V_{V}/V_{R} indicates a higher amount of rubber in the tread, which leads to higher stiffness and thus increases breaking performance. A void to rubber ratio in the specified range provides optimal tradeoff between snow and dry performance, providing a tire which exhibits good breaking performance on dry ground as well as good traction on snow-covered grounds.

In some embodiments, described in more detail elsewhere herein, the tread comprises further blocks on the other side of the equatorial plane 16 of the tire. In some embodiments described elsewhere herein, these further blocks may have axisymmetric configuration with respect to the blocks 10 shown in Fig. 2, such that the overall pattern is V-Shaped. In other embodiments described elsewhere herein, the further blocks may be point-symmetric, such that the overall pattern is S-shaped. In any case, the present disclosure is not directed at a specific orientation of the blocks but can be applied to blocks of various shapes and orientations.

Moreover, while the present disclosure is described with respect to tread patterns which are generally symmetric, i.e., having same or similar tread configuration on both sides of the equatorial plane, it will be understood that the concept described herein can also be applied in asymmetric tread patterns, i.e., in patterns having substantially different tread configurations on both sides of the equatorial plane of the tire.

Generally, the blocks 10 have the purpose of providing contact to the ground when the tire is in rolling condition. The edges as well as the surfaces of the blocks are configured to provide a friction force between the tire and the ground for grip, allowing general roadholding as well as movement control of the vehicle by a driver of a vehicle by acceleration, breaking or steering.

According to Fig. 2, the tread further comprises a plurality of first grooves 18 arranged over the circumference of the tire, wherein each of the plurality of first grooves 18 is arranged between two blocks 10 of the set of consecutive blocks. Preferably, the grooves 18 start near the equatorial plane 16 of the tire and extend towards a shoulder end of the tread to open at the outer edge of the tire. The grooves 18 are generally delimited by the adjacent blocks 10.

The purpose of the grooves 18 is mainly the drainage of water from the contact patch by guiding the water along the groove 18 towards the shoulder of the tire and eject the water from there, as the tire rolls on the ground. Thus, the grooves 18 provide for improved performance of the tire, especially in wet road conditions. Further, as the grooves delimit the consecutive blocks, they also provide edges for the blocks for improved snow performance. Moreover, the grooves allow for improved wear performance, as they allow more flexibility of the tread elements, such that slippage of the blocks over the ground is reduced, leading to a decrease in the abrasion effects leading to wear.

According to Fig. 2, the tread further comprises a plurality of second grooves 20, wherein each of the second grooves 20 is arranged between a shoulder portion and the intermediate portion of each of the set of blocks 10. In some embodiments, each second groove 20 is arranged in a substantially circumferential direction. In some embodiments, each second groove 20 may be arranged as a substantially straight line, e.g., with a small inclination with respect to the circumferential direction; in other embodiments, as shown for example in Fig. 2, each second groove 20 may be arranged with a zigzag form, e.g., including three differently inclined parts. The zigzag form of the second groove 20 allows for a partial interruption of the strain and slippage behavior of the tire, thus improving the distribution of wear energy over the axial extension of the block 10.

Thus, in the preferred embodiments, the second grooves generally have the purpose of decoupling the shoulder portions of the blocks 10 from the intermediate portions of the blocks 10. For example, during acceleration or breaking, the shoulder portion of a block 10 may be especially strained because it is arranged generally perpendicularly to a circumferential direction of the tire. This may lead to deformation of the block 10 in the shoulder portion. To ensure good steering performance as well as lateral road holding also during breaking and acceleration, it is thus desirable to mechanically decouple the shoulder portion from the intermediate portion of the block 10. This decoupling is preferably achieved by providing a second groove 20 therebetween.

Thus, in the preferred embodiments, the invention does not completely dispose of any grooves arranged in substantial circumferential direction (however, this is also possible). Rather, in the preferred embodiments, it is the substantial circumferential groove arranged between two more inner portions (e.g., intermediate and central portion) of the block that can be omitted and is replaced by one or more recesses as described herein.

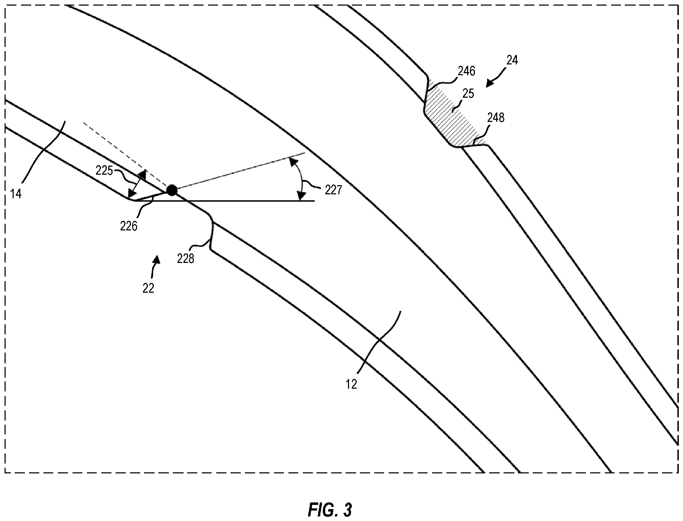

Fig. 3 illustrates a close-up view of the block portion containing the recesses.

The block 10 illustrated in Fig. 3 corresponds to one of the blocks 10 of Fig. 2. Thus, the block 10 of Fig. 3 also comprises a first portion 12 and a second portion 14, as well as a first recess 22 arranged between the first portion 12 and the second portion 14. As illustrated in Fig. 3, the block 10 may further comprise a and a second recess 24 arranged between the first portion 12 and the second portion 14. According to Fig. 3, each of the recesses 22, 24 comprises a surface area 25. In Fig. 3, the surface area 25 is for better lucidity only illustrated for the second recess 24, however it is to be understood that all properties described with respect to one recess may also be applied to the other recess unless otherwise specified.

In some embodiments, the first recess 22 and/or the second recess 24 may have a surface area 25 of at least 4 mm² and at most 60 mm². Preferably, the first recess 22 and/or the second recess 24 may have a surface area 25 of at least 6 mm² and at most 50 mm².

This range provides a good trade-off between wear and performance. A higher surface area leads to improved performance, since the bending capacity is increased with a larger recess. However, a large recess also increases local wear. Thus, a recess 22 with a surface area of at least 4 mm² may be arranged to achieve increased bending capacity, but the surface area of the recess 22 may preferably be at most 60 mm² to avoid increased wear.

In some embodiments, the first recess 22 and/or the second recess 24 may have an extension measured perpendicular to a tangent to the block of at least 1.5 mm and at most 45% of a width of the block measured at an axial outer end of the recess. Preferably, the first recess 22 and/or the second recess 24 may have an extension 225 measured perpendicular to a tangent to the block of at least 1.5 mm and at most 35% of the width of the block measured at an axial outer end of the recess.

Similar as above, this provides a good trade-off between wear and performance. A higher extension of the recess measured perpendicular to the block leads to improved decoupling/bending properties, but also increases local wear of the tread. Thus, preferably an extension measured perpendicular to a tangent to the block of at least 1.5 mm may be chosen to increase the decoupling/bending properties of the block. Moreover, an extension of at most 45% of the width of the block 10 may be chosen. The width of the block may herein be measured perpendicular to a block tangent and at a position adjacent to the first recess 22. By choosing a width of at most 45% of the block width, the increase in wear can be limited, to achieve the desired tradeoff between wear and decoupling/bending properties.

In some embodiments, the first recess 22 and/or the second recess 24 may have at least one edge which is inclined (as illustrated in Fig. 3 by inclination angle 227) at least 0° and at most 30° with an axial direction of the tire. Preferably, the first recess 22 and/or the second recess 24 may have at least one edge which is inclined at least 5° and at most 20° with the axial direction of the tire.

Within this inclination range, edges can contribute to the grip on snow-covered grounds. Thus, by providing a recess with at least one edge in the specified range, the tire's snow performance can be improved.

In some embodiments, the first recess 22 and/or the second recess 24 may have an external edge 226, 246 which is an edge of the recess 22, 24 closest to the shoulder of the tire and an internal edge 228, 248 which is opposite to the external edge, and wherein for the first recess 22, the external edge 226 is inclined between 0° and 30° with an axial direction of the tire, and wherein for the second recess 24, the internal edge 248 is inclined between 0° and 30° with an axial direction of the tire.

While the embodiments described above are directed to blocks having three portions, blocks with more portions, for example with four or more portions, are also possible. This can be realized for example by sub-partitioning, i.e., partitioning a portion into one or more continuously formed sub-portions. In such embodiments, recesses may be arranged between any two continuously formed portions, for example between a first and a second portion, between a second and a third portion, between a third and a fourth portion, and so on.

Moreover, while the embodiments described above comprise one recess per block edge, there may be alternative embodiments where two or more smaller recesses are arranged close to one another on one edge, so as to behave similarly as the one recess described in the above embodiments.

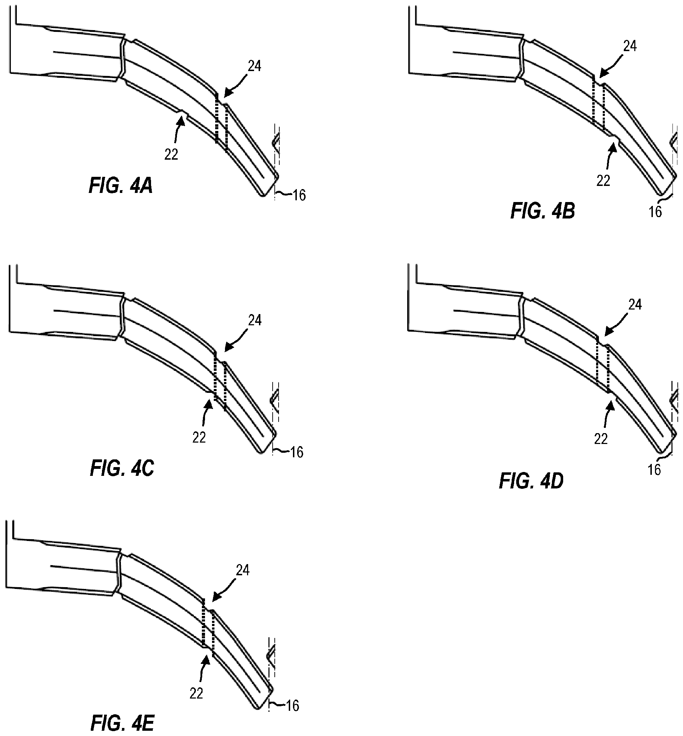

Figs. 4A to 4E illustrate various embodiments of a block having two recesses between the first and the second portion in different arrangements.

Figs. 4A and 4B illustrate an embodiment of the present disclosure, wherein the first recess 22 and the second recess 24 are not circumferentially aligned. This means that there is no plane which is parallel to the equatorial plane 16 of the tire, which cuts both the first recess 22 and the second recess 24.

In the embodiment of Figs. 4A, the first recess 22 is arranged axially more inwardly than the second recess 24. In the embodiment of Figs. 4B, the first recess 22 is arranged axially more inwardly than the second recess 24. The embodiments illustrated in Figs. 4A and 4B provide for a more even distribution of block stiffness over the axial extension of the block.

Alternatively, Figs. 4C and 4D illustrate an embodiment of the present disclosure, wherein the first recess 22 and the second recess 24 are partially circumferentially aligned. That means, that a plane parallel to the equatorial plane 16 can be constructed, which cuts both the first recess 22 and the second recess 24, but at the same time, planes can be constructed which are parallel to the equatorial plane but cut only one of the first recess 22 or the second recess 24.

In the embodiment of Figs. 4C, the first recess 22 is arranged axially more inwardly than the second recess 24. In the embodiment of Figs. 4D, the first recess 22 is arranged axially more inwardly than the second recess 24. The embodiments illustrated in Figs. 4C and 4D similarly provide for a more even distribution of block stiffness over the axial extension of the block.

Alternatively, Figs. 4E illustrates an embodiment of the present disclosure, wherein the first recess 22 and the second recess 24 are fully circumferentially aligned. That means that a first plane parallel to the equatorial plane 16 of tire intersects with both external edges of the first and second recess 22, 24, and a second plane parallel to the equatorial plane 16 of tire intersects with both internal edges of the first and second recess 22, 24. This embodiment provides for especially improved bending capability of the block in the desired portions, as the block is even further narrowed by means of the circumferentially fully aligned recesses.

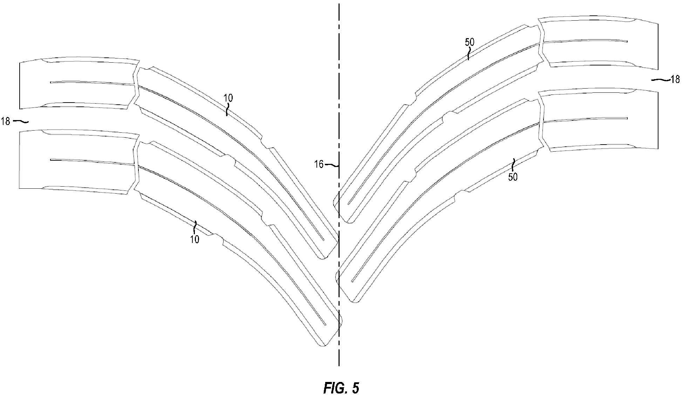

Fig. 5 illustrates an exemplary embodiment of a V-shaped directional tread pattern according to the present disclosure.

According to Fig. 5, some embodiments of the tread may comprise a second set of consecutive blocks 50, generally corresponding to the first set of consecutive blocks 10, which is arranged at an opposite side of the equatorial plane 16 of the tire. In some embodiments, as illustrated in Fig. 5, the second set of consecutive blocks 50 can be provided axisymmetric to the first set of blocks 10, leading to a V-shaped tread pattern which has a preferred rolling direction. The V shape provides the advantage of improved water drainage properties, because, when the tire rolls in the preferred rolling direction, water can be ejected from the contact patch by means of two opposite first grooves in opposite axial directions of the tread. Thus, traction on wet roads can be improved. While the directional pattern with the preferred rolling direction is advantageous for wet road surfaces, other embodiments are possible.

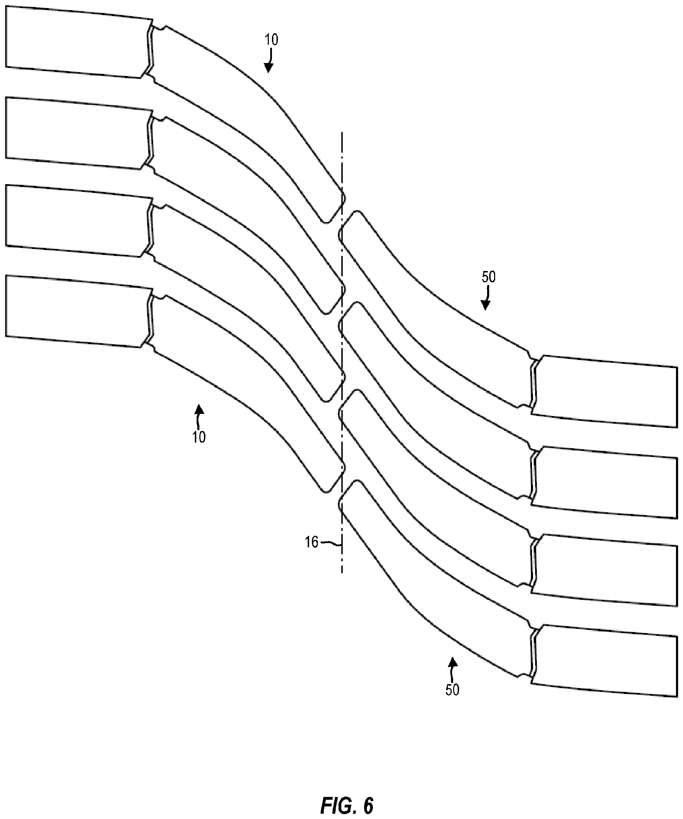

For example, Fig. 6 illustrates an exemplary embodiment of an S-shaped tread pattern according to the present disclosure. For some embodiments, according to Fig. 6, the tread may comprise a second set of consecutive blocks 50 in addition to the first set of consecutive blocks 10. The second set of consecutive blocks 50 may be arranged on an opposite side of the equatorial plane 16 of the tire. In contrast to the above-described embodiment comprising a V-shaped tread pattern, the second set of consecutive blocks 50 may be provided point-symmetric to the first set of blocks 10, leading to an S-shaped tread pattern which does not have preferred rolling direction.

### Tire footprint measurement

Within the context of this disclosure, a "tire footprint" means all parts of the tire that come into contact with the ground when the tire is in inflated and loaded condition. The tire footprint gives information about the behavior of a tread profile in normal condition, i.e., from the tire footprint it can be seen, which parts of the blocks come into contact with the ground under static loading conditions.

When analyzing a tire footprint, generally, the respective tire is inflated, with the pressure depending on the type of the tire. For a standard radial passenger tire with nominal section widths of 195 mm and below, a tire pressure of 1.9 bar is used. For a standard radial passenger tire with nominal section widths of 205 mm and above, a tire pressure of 2.0 bar is used. For Reinforced radial passenger tires of all sizes, a pressure of 2.3 bar is used. For tires of commercial vans, trucks, etc., the standardized inflation pressure according to the European Tyre and Rim Technical Organisation (ETRTO) is used. All measurements are conducted under room ambient temperature.

The tire is then loaded at the following load conditions: For a radial passenger tire, the tire is loaded with weight corresponding to 88% of the tire load index according to ETRTO charts. Tires for commercial vans, trucks, etc. are loaded with weight corresponding to the ETRTO single load rated standard. To conduct the measurement, ink may be applied to the tread profile and the tire may then be pushed against a card according to the above specifications, leaving an ink footprint which can then be analyzed. A footprint is evaluated on three tire portions which are equally spaced by 120° over the circumference of the tire. The metrics that are analyzed in the footprint are then averaged over the three measured portions.

### Tire void volume and rubber volume measurement

The tire void volume in the context of this application is also measured in footprint condition. I.e., the tire is inflated in the same way as described above with respect to the tire footprint measurement. The void volume is measured by a laser measurement system which is capable of detecting, for each pixel, its relative depth with respect to the tread surface. By this, a total void volume in the contact patch can be calculated by integrating over all measured pixels. The total tread volume can be calculated as the product of the footprint width (FW) and the circumference (C) of the tire, multiplied with the weighed mean depths of the first grooves. The total rubber volume is then the difference between the total tread volume and the total void volume.

Measurement values given in the present disclosure refer to measurements conducted in footprint condition and on new tires, which have not been exposed to wear before the measurement.

### List of reference numbers

- 10, 50: block
- 12: first portion
- 14: second portion
- 16: equatorial plane
- 18: first grooves
- 20: second groove
- 22, 24: recess
- 25: surface area
- 26: connection line
- 30: sipe
- 100: tire
- 110: tread
- 120: circumferential direction
- 130: axial direction
- 140: radial direction
- 150: center
- 222, 242: geometric center
- 225: extension
- 226, 246: external edge
- 227: inclination angle
- 228, 248: internal edge
In the following, preferred embodiments are described to facilitate a deeper understanding of the invention.
Embodiment 1: A tire for a vehicle comprising a tread, the tread comprising:
   a set of consecutive blocks arranged along a circumference of the tire, wherein each block comprises a leading edge and a trailing edge; and
   a plurality of first grooves arranged over the circumference of the tire, wherein each of the plurality of first grooves is arranged between two blocks of the set of consecutive blocks;
   each of the set of consecutive blocks comprising:
      a first portion arranged at a central portion of the tire, and
      a second portion arranged in axial direction towards a shoulder of the tire with respect to the first portion;
      wherein the first portion and the second portion are formed continuously;
      wherein a first recess is formed between the first portion and the second portion, and
      wherein the first recess is arranged in at least one of the leading edge and the trailing edge of the block.
Embodiment 2: The tire of Embodiment 1, wherein the first recess has a surface area of at least 4 mm2 and at most 60 mm2.
Embodiment 3: The tire of any one of the preceding Embodiments, wherein the first recess has an extension measured perpendicular to a tangent to the block of at least 1.5 mm and at most 45% of a width of the block measured at an axial outer end of the recess.
Embodiment 4: The tire of any one of the preceding Embodiments, wherein the first recess has at least one edge which is inclined at least 0° and at most 30° with an axial direction of the tire.
Embodiment 5: The tire of any one of the preceding Embodiments, wherein the first recess is arranged at the leading edge of the block, and the block further comprising a second recess which is arranged at the trailing edge of the block.
Embodiment 6: The tire of Embodiment 5, wherein a connection line between a geometric center of the first recess and a geometric center of the second recess has an inclination angle with respect to the circumferential direction of at least 0° and at most 80°.
Embodiment 7: The tire of Embodiment 5, wherein the first recess and the second recess are arranged such that a plane parallel to an equatorial plane of tire intersects with both the first and the second recess.
Embodiment 8: The tire of Embodiment 5, wherein the first recess and the second recess both have an external edge which is an edge of the recess closest to the shoulder of the tire and an internal edge which is opposite to the external edge, and wherein a first plane parallel to an equatorial plane of tire intersects with both external edges of the first and second recess, and a second plane parallel to an equatorial plane of tire intersects with both internal edges of the first and second recess.
Embodiment 9: The tire of any one of Embodiments 5 to 8, wherein the second recess has at least one of the following:
   (a) a surface area of at least 4 mm2 and at most 60 mm2;
   (b) an extension measured perpendicular to a tangent to the block of at least 1.5 mm and at most 45% of a width of the block measured at an axial outer end of the recess; and
   (c) at least one edge which is inclined at least 0° and at most 30° with an axial direction of the tire.
Embodiment 10: The tire of any one of Embodiments 5 to 9, wherein the first recess and the second recess both have an external edge which is an edge of the recess closest to the shoulder of the tire and an internal edge which is opposite to the external edge, and wherein for the first recess, the external edge is inclined at least 0° and at most 30° with an axial direction of the tire, and wherein for the second recess, the internal edge is inclined at least 0° and at most 30° with an axial direction of the tire.
Embodiment 11: The tire of any of the proceedings Embodiments, wherein the first recess has a vertical extension measured perpendicular to an outer surface of the block in contact with ground when the tire is in rolling condition, the vertical extension being at least 20% of a depth of the first grooves.
Embodiment 12: The tire of any one of the preceding Embodiments, the tread further comprising:
   a plurality of sipes defining an edge ingredient, EI, corresponding to the ratio between a sum of projected lengths of the plurality of sipes in an axial direction, SAP, and the circumference of the tread, C, such that $EI = \frac{\sum SAP}{C} ,$
   wherein the EI is at least 2 and at most 20.
Embodiment 13: The tire of any one of the preceding Embodiments, wherein the ratio between void volume and rubber volume is at least 0.20 and at most 0.40, and preferably at least 0.28 and at most 0.35.

## Claims

1. A tire for a vehicle comprising a tread, the tread comprising:
a set of consecutive blocks arranged along a circumference of the tire, wherein each block comprises a leading edge and a trailing edge; and
a plurality of first grooves arranged over the circumference of the tire, wherein each of the plurality of first grooves is arranged between two blocks of the set of consecutive blocks;
each of the set of consecutive blocks comprising:
a first portion arranged at a central portion of the tire, and
a second portion arranged in axial direction towards a shoulder of the tire with respect to the first portion;
wherein the first portion and the second portion are formed continuously;
wherein a first recess is formed between the first portion and the second portion, and wherein the first recess is arranged in at least one of the leading edge and the trailing edge of the block,
wherein the first recess has at least one edge which is inclined at least 0° and at most 30° with an axial direction of the tire.

2. The tire of claim 1, wherein the first recess has a surface area of at least 4 mm2 and at most 60 mm2.

3. The tire of any one of the preceding claims, wherein the first recess has an extension measured perpendicular to a tangent to the block of at least 1.5 mm and at most 45% of a width of the block measured at an axial outer end of the recess.

4. The tire of any one of the preceding claims, wherein the first recess is arranged at the leading edge of the block, and the block further comprising a second recess which is arranged at the trailing edge of the block.

5. The tire of claim 4, wherein a connection line between a geometric center of the first recess and a geometric center of the second recess has an inclination angle with respect to the circumferential direction of at least 0° and at most 80°.

6. The tire of claim 4, wherein the first recess and the second recess are arranged such that a plane parallel to an equatorial plane of tire intersects with both the first and the second recess.

7. The tire of claim 4, wherein the first recess and the second recess both have an external edge which is an edge of the recess closest to the shoulder of the tire and an internal edge which is opposite to the external edge, and wherein a first plane parallel to an equatorial plane of tire intersects with both external edges of the first and second recess, and a second plane parallel to an equatorial plane of tire intersects with both internal edges of the first and second recess.

8. The tire of any one of claims 4 to 7, wherein the second recess has at least one of the following:
(a) a surface area of at least 4 mm2 and at most 60 mm2;
(b) an extension measured perpendicular to a tangent to the block of at least 1.5 mm and at most 45% of a width of the block measured at an axial outer end of the recess; and
(c) at least one edge which is inclined at least 0° and at most 30° with an axial direction of the tire.

9. The tire of any one of claims 4 to 8, wherein the first recess and the second recess both have an external edge which is an edge of the recess closest to the shoulder of the tire and an internal edge which is opposite to the external edge, and wherein for the first recess, the external edge is inclined at least 0° and at most 30° with an axial direction of the tire, and wherein for the second recess, the internal edge is inclined at least 0° and at most 30° with an axial direction of the tire.

10. The tire of any of the proceedings claims, wherein the first recess has a vertical extension measured perpendicular to an outer surface of the block in contact with ground when the tire is in rolling condition, the vertical extension being at least 20% of a depth of the first grooves.

11. The tire of any one of the preceding claims, the tread further comprising:
a plurality of sipes defining an edge ingredient, EI, corresponding to the ratio between a sum of projected lengths of the plurality of sipes in an axial direction, SAP, and the circumference of the tread, C, such that $EI = \frac{\sum SAP}{C} ,$
wherein the EI is at least 2 and at most 20.

12. The tire of any one of the preceding claims, wherein the ratio between void volume and rubber volume is at least 0.20 and at most 0.40, and preferably at least 0.28 and at most 0.35.
